# EUROPEAN PATENT SPECIFICATION

(11) **EP 3 294 628 B1**
(45) Date of publication and mention of the grant of the patent: **17.02.2021**
(21) Application number: 17797223.9
(22) Date of filing: 19.07.2017
(51) Int. Cl.: B64D 31/02, B64D 35/00, F02D 37/00, B64C 11/32

(54) **SINGLE INPUT ENGINE CONTROLLER AND SYSTEM**
MOTORSTEUERGERÄT MIT EINZELEINGABE UND SYSTEM
DISPOSITIF DE COMMANDE DE MOTEUR À ENTRÉE UNIQUE ET SYSTÈME

(30) Priority: 20.07.2016 US 201662364660 P
(43) Date of publication of application: 21.03.2018
(73) Proprietor: DeltaHawk Engines, Inc., Racine, WI 53404 (US)
(72) Inventor: WEBB, Dennis R., Franksville Wisconsin 53126 (US); CRANMER, William J., Racine Wisconsin 53403 (US); DOERS, Douglas A., Franklin Wisconsin 53132 (US)
(74) Representative: Barker Brettell LLP
(86) International application number: PCT/US2017/042889
(87) International publication number: WO 2018/017733

(56) References cited:
- WO-A1-2015/053930
- JP-A- H07 119 500
- US-A- 2 396 618
- US-A- 2 628 684
- US-A- 2 725 108
- US-A- 4 019 697
- US-A- 4 970 860
- US-A1- 2015 211 422

## Description

### CROSS-REFERENCE TO RELATED APPLICATIONS

### BACKGROUND OF THE INVENTION

The present invention relates generally to the field of airplane engine and propeller controllers. The present invention relates specifically to a single input engine controller that simultaneously controls the fuel supplied to an engine and the revolutions per minute (RPM) of a propeller powered by that engine. Aircraft engines typically employ two separate control inputs. The first input controls the amount of fuel fed into the engine which correlates to the amount of horsepower output by the engine. The second input controls a propeller governor, which continually adjusts the angle of the propeller to maintain a specific propeller RPM set by the second input. Separately controlling the RPM of the propeller allows for improved fuel efficiency when compared with a fixed angle propeller because the minimum RPM required for operation varies as a function of the horsepower of the engine and the needed horsepower of the engine varies depending on the desired mode of operation of the aircraft. For example, the greatest amount of horsepower is required during takeoff and significantly less horsepower even up to 50% less is required once cruising altitude is reached. Leaving the propeller at the RPM setting corresponding to the max horsepower wastes fuel by spinning the propeller more than is required to propel the aircraft.

The typical two input system requires pilots to consult charts or remember the complex relationship between the horsepower setting and the propeller RPM that achieves the maximum fuel efficiency. Unfortunately, most pilots do not take the time to remember or consult such charts and simply leave the propeller RPM setting at the level required for takeoff. This results in wasted fuel and shorter flight distances because FAA regulations require planes to maintain a specific amount of fuel upon landing. What is needed then is a system that varies the propeller RPM setting to the ideal fuel efficient setting in response to a single input from the standard fuel controller.

A method of operating a propulsion system for an aircraft is disclosed in US2725108. The aircraft has a turbine power plant and a controllable pitch rotor driven by the turbine power plant. The method includes the steps of increasing the flow of fuel to the turbine to increase the power thereof and simultaneously increasing the pitch of the rotor.

A hydraulic time-delay device is disclosed in US2628684. The device comprises a fluid pressure servomotor having a fixed element and a movable element with a working chamber between them. The movable servo element has: a port through which motive fluid can be supplied to the working chamber, and valve means which when rotated admits the motive fluid through the port to the working chamber to rotate the movable servo element to a new position in which the port is again closed by the valve means.

A regulating device for an aircraft power plant is disclosed in US2396618. The device comprises: means for controlling the operation of the engine; a reciprocating member to actuate the controlling means; a cam mounted for both rotatory and axial movements; a reciprocatory follower bearing upon the cam and adapted to reciprocate said reciprocating member, the surface of the cam having such configuration that the follower is reciprocated by either the rotatary movement or the axial movement of the cam; manually operated means for imparting axial movement to the cam; and a barometric device for imparting rotatory movement to the cam.

### SUMMARY OF THE INVENTION

Aspects of the invention is set out according to appended claims 1, 2 and 10. Embodiments of the invention are set out according to the appended dependent claims.

### BRIEF DESCRIPTION OF THE DRAWINGS

This application will become more fully understood from the following detailed description, taken in conjunction with the accompanying figures, wherein like reference numerals refer to like elements in which:
FIG. 1 is a block diagram of an example system employing a single input engine controller.
FIG. 2 is a block diagram of a different example system employing a single input engine controller.
FIG. 3 is an internal view of an example embodiment of a single input engine controller.
FIG. 4 is an exploded view of the components of an example embodiment of a single input engine controller from the top.
FIG. 5 is an exploded view of the components of an example embodiment of a single input engine controller from the bottom.
FIG. 6 is an exploded view of the components of an example embodiment of a single input engine controller from the front.
FIG. 7 is an internal view of an example embodiment of a single input engine controller in the maximum fuel position.
FIG. 8 is an internal view of an example embodiment of a single input engine controller in the minimum fuel position.
FIG. 9 is an internal view of an example embodiment of a single input engine controller in the maximum fuel position combined with an idle governor.
FIG. 10 is an internal view of an example embodiment of a single input engine controller in the minimum fuel position combined with an idle governor.
FIG. 11 is a partial view of an example embodiment of a single input engine controller having an alternative internal arrangement.
FIG. 12 is an internal view of an example embodiment of a single input engine controller.

### DETAILED DESCRIPTION

Referring generally to the figures, various embodiments of a single input engine controller alone and in combination with additional engine control components are shown. The single input engine controller receives an input from a standard fuel or power controller for an engine and outputs one signal for setting the engine fuel amount to achieve a specific amount of horsepower and a second signal for setting the RPM of a propeller to the value corresponding to the ideal fuel efficient RPM setting for the specific power to be output by the engine in response to the fuel setting. This configuration eliminates the pilots need to manually adjust the RPM, ensuring the aircraft is operating at or very near the ideal fuel efficiency level.

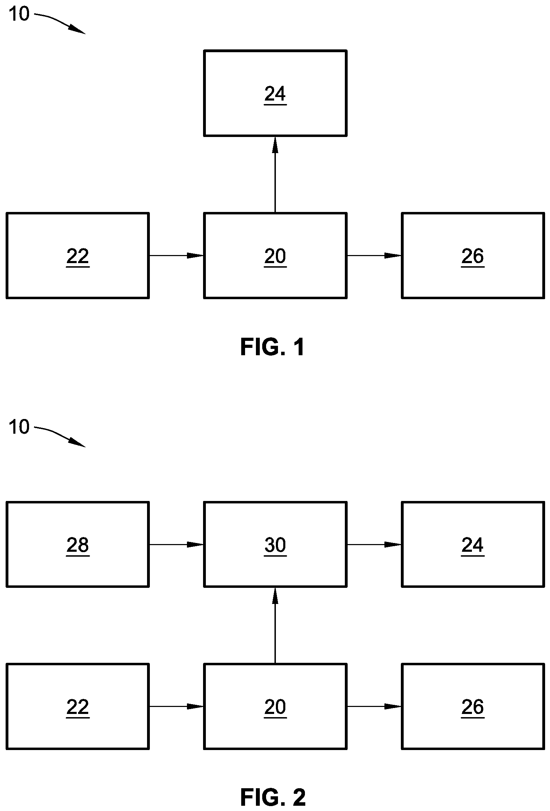

Referring to FIG. 1, a schematic diagram of an example single input engine control system 10 is shown. System 10 includes a single input controller or mixer 20, a fuel control interface 22 coupled to single input controller 20, a fuel distribution system 24 coupled to single input controller 20, and a propeller RPM controller 26 also coupled to single input controller 20. Single input controller 20 receives a signal indicative of the specific amount of fuel to be supplied to the engine controlled by system 10. In one embodiment, fuel control interface 22 is a standard lever controller. Single input controller 20 passes the signal on to the fuel distribution system 24 which receives the signal and supplies the engine with the specific amount of fuel which outputs the amount of horsepower corresponding to that amount of fuel. Single input controller 20 also translates the signal received from fuel control interface 22 into a signal indicative of the fuel efficient RPM value for the specific amount of horsepower generated by the specific amount of fuel. The translated signal is then passed to propeller RPM controller 26 which adjusts the RPM of the propeller to conform to the fuel efficient value. In one embodiment, propeller RPM controller 26 is a propeller governor that varies the angle of the propeller blades to maintain the RPM level indicated by the translated signal.

Referring to FIG. 2, a schematic diagram of an alternative embodiment of engine control system 10 is shown. In this embodiment, system 10 further includes an idle governor 28 and an idle control module 30. Single input controller 20 and idle governor 28 are coupled to idle control module 30 which is coupled to fuel distribution system 24. Idle control module 30 receives the signal indicative of the specific amount of fuel passed by single input controller 20 and passes that signal along to fuel distribution system 24 which operates as described above. However, when the signal indicative of the amount of fuel is at its minimum idle control module 30 passes a fuel amount signal generated by idle governor 28 onto fuel distribution system 24. The fuel amount signal generated by idle governor 28 toggles the amount of fuel to maintain a low idle speed for the engine and prevent it from stalling out. In embodiments without an idle governor 28, such as described with respect to FIG. 1, the fuel control interface 22 must be manually toggled to maintain low idle speed. The addition of idle governor 28 and idle control module 30 automate this procedure and make flying the aircraft easier and more user friendly.

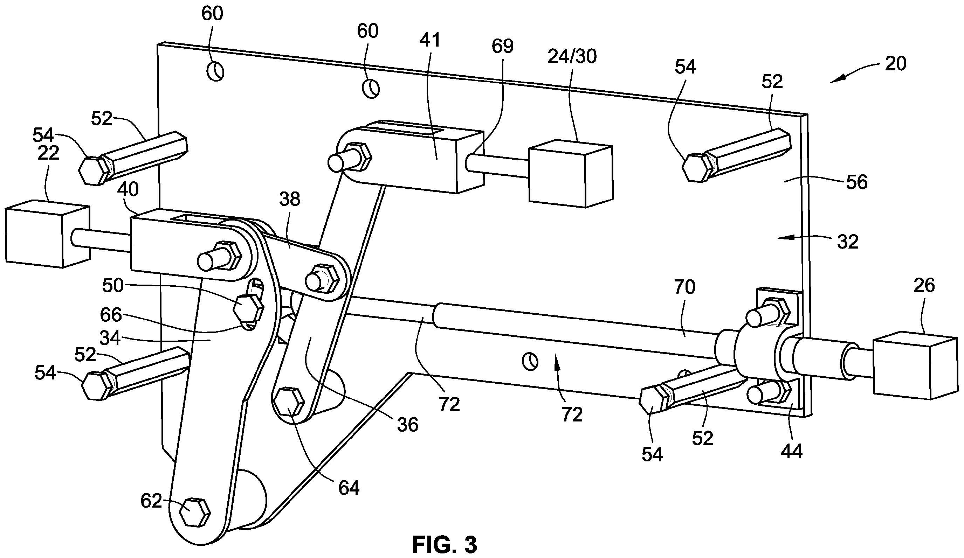

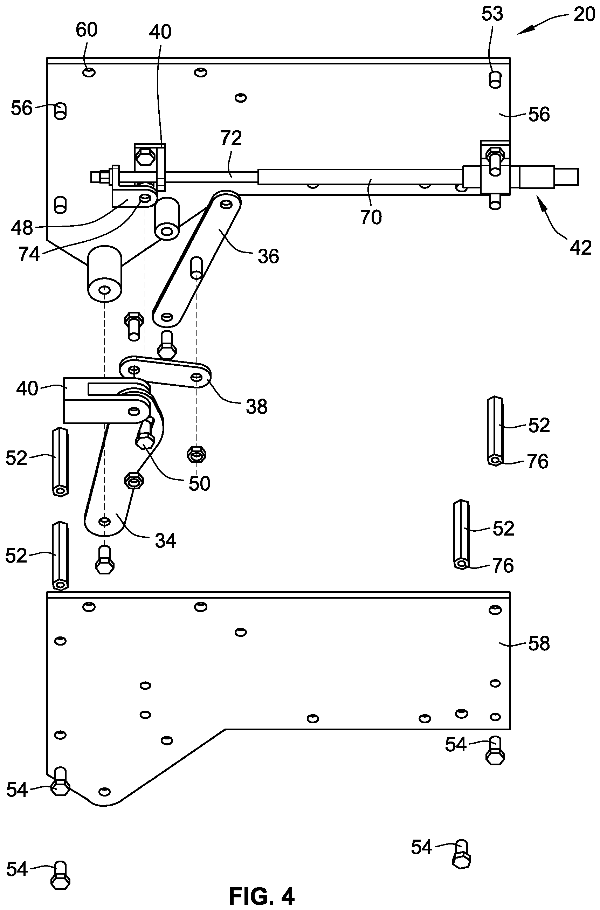

Referring now to FIG. 3, an internal view of one embodiment of single input controller 20 is shown. Single input controller 20 includes a housing 32, an RPM control lever 34, a fuel control lever 36, a linkage 38, clevises 40 and 41, an RPM control linkage 42, a first bracket 44, a second bracket 46 (see FIG. 4), a connector 48 (see FIG. 4), a coupling member 50, standouts or spacers 52, back securing members 53 (see FIG. 4), and front securing members 54. Housing 32 includes a back plate 56, and a front plate 58 (see FIG. 4) each of which have formed therein a plurality of mounting holes 60. Housing 32 also includes a first pivot point 62 and second pivot point 64 secured between front and back plates 58 and 56. RPM control lever 34 includes a cammed slot 66 for coupling RPM control lever 34 to RPM control linkage 42. Clevises 40 and 41 serve as input and output points for fuel control and include mounting holes 68 and 69 for mechanically linking single input controller 20 to other components of a system such as system 10. RPM control linkage 42 includes a sheath or cover 70 and a cable link 72 slidably contained within cover 70. Connector 48 includes a mounting hole 74. Standouts 52 include a through bore 76.

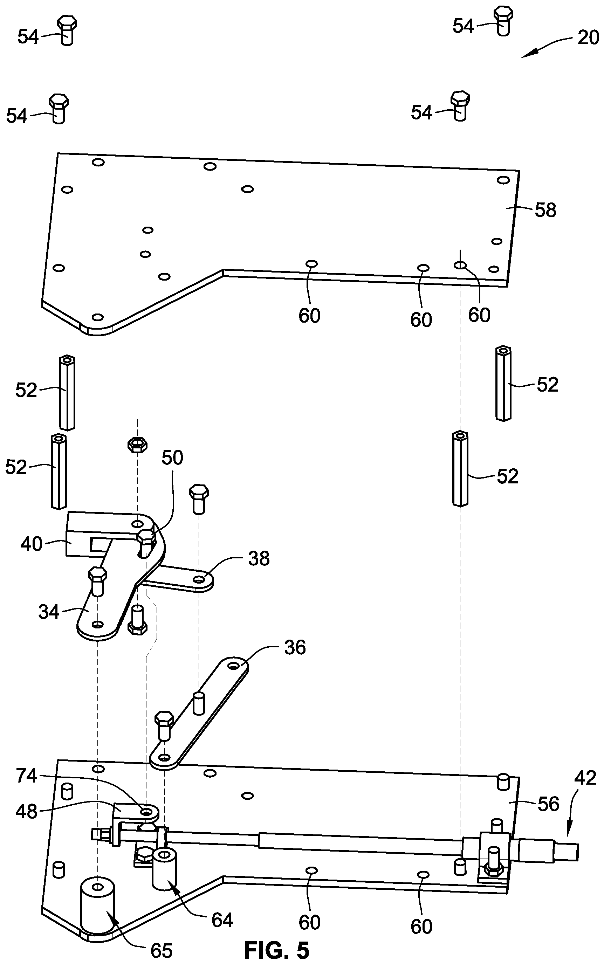

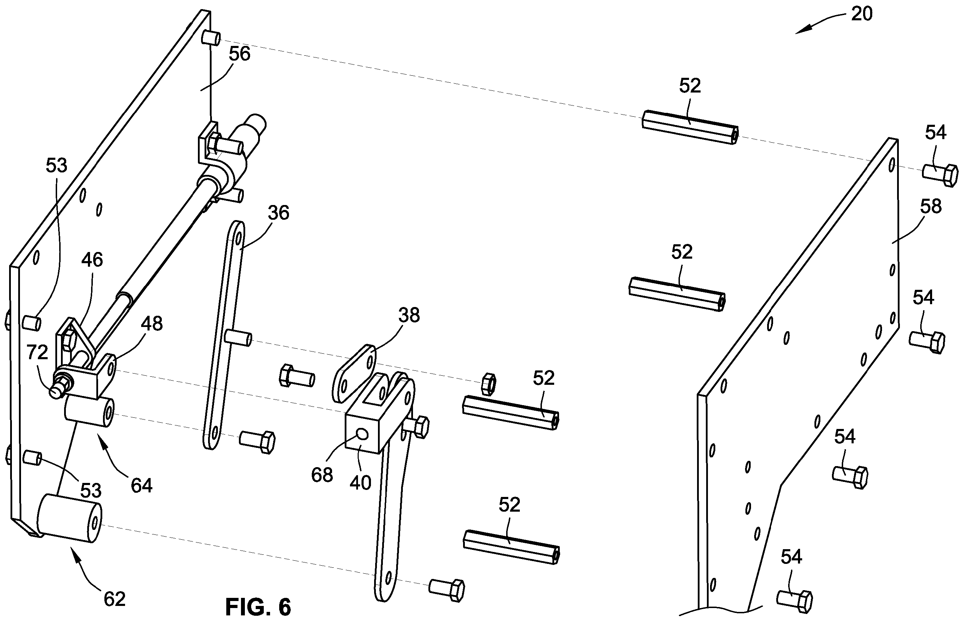

Referring now to FIG. 4 through FIG. 6, exploded views of different angles of single input controller 20 are shown. Single input controller 20 is assembled such that RPM control lever 34 and fuel control lever 36 are pivotably coupled to first pivot point 62 and second pivot point 64 respectively such that they can rotate within a plane parallel to front and back plates 58 and 56. Fuel control lever 36 is pivotably coupled to RPM control lever 34 by linkage 38. Various methods for pivotably coupling RPM control lever 34 to fuel control lever 36 are contemplated that include both more and fewer linkages than the single linkage 38 as shown in the figures.

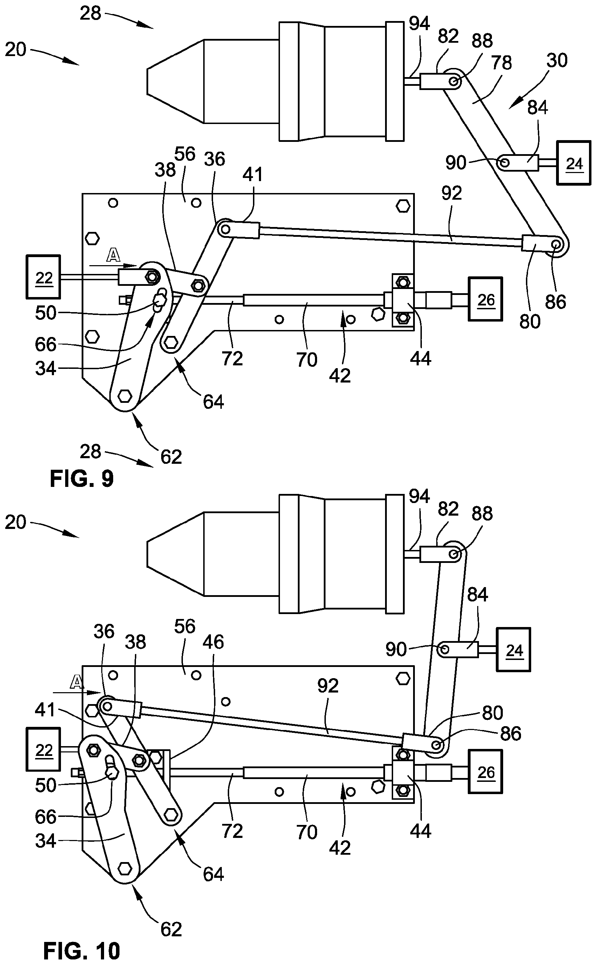

Clevis 40 is pivotably coupled to RPM control lever 34 and when single input controller 20 is placed in a system such as system 10 clevis 40 receives and secures a mechanical link from the fuel control interface 22 within mounting hole 68. Clevis 41 is pivotably coupled to fuel control lever 36 and when single input controller 20 is placed in a system such as system 10, clevis 41 receives and secures a mechanical link to either the fuel distribution system 24 or idle control module 30 (see FIG. 9 and FIG. 10) within mounting hole 69.

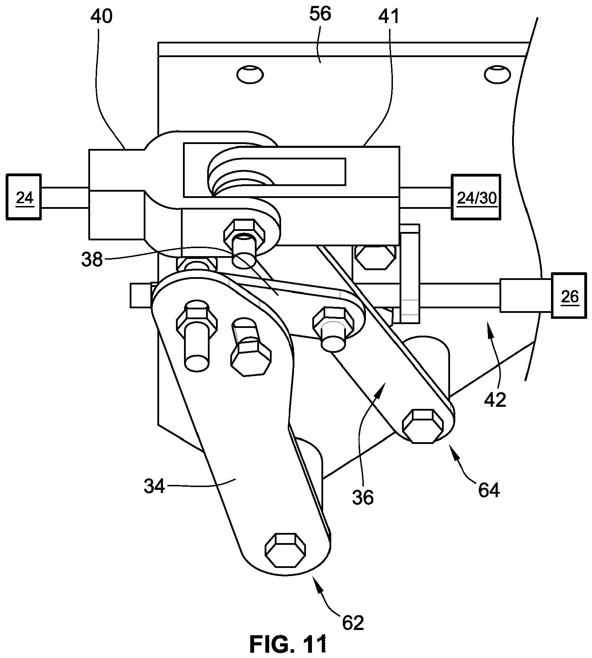

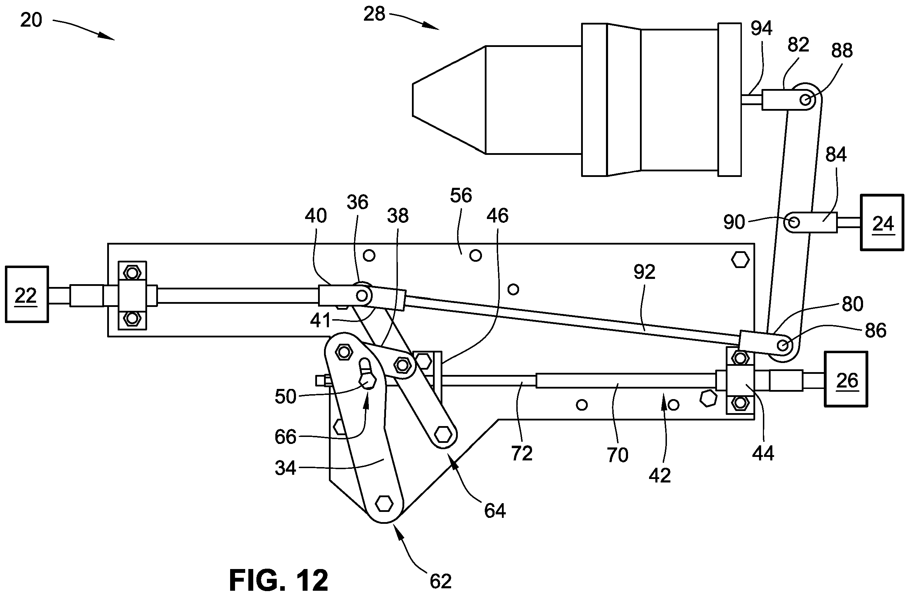

In one embodiment as shown in FIGS. 11 and 12, clevises 40 and 41 are both pivotably coupled to fuel control lever 36. Clevises 40 and 41 can be coupled to the same point on fuel control lever 36 with one clevis coupled on top of the other (shown as clevis 40 on top of clevis 41 in FIGS. 11 and 12). Alternatively, clevises 40 and 41 can be pivotably coupled to different points on fuel control lever 36. Coupling clevis 40 directly to fuel control lever 36 ensures a direct link between fuel control interface 22 and fuel distribution system 24 or idle control module 30. In an alternative embodiment, clevises 40 and 41 are omitted and the mechanical links are coupled directly to RPM and fuel control levers 34 and 36 respectively or both are coupled directly to fuel control lever 36. In another embodiment, the components of single input controller 20 described above as pivotably coupled together employ bolts having a head at one end passing through holes in the coupled components with a nut closing off the end of the bolts opposite the head such that the coupled components can freely rotate around the portion of the bolts between the head and the nut.

Cover 70 of RPM control linkage 42 is positionally fixed and secured to back plate 56 by first bracket 44. Fixing cover 70 allows for cable 72 to slide freely within cover 70. Cable link 72 passes through a hole in second bracket 46 mounted to back plate 56 to guide cable link 72. One end of cable link 72 is secured to connector 48. In one embodiment, the end of cable link 72 is threaded and is secured to connector 48 by a nut. The opposite end of cable 72 is coupled to a propeller RPM controller such as propeller RPM controller 26 when single input controller 20 is placed in a system such as system 10. Coupling member 50 passes partially through cammed slot 66 and is secured into mounting hole 74 thereby coupling RPM control lever 34 to RPM control linkage 42. Coupling member 50 is slidably movable within cammed slot 66. Back securing members 53 partially pass through a subset of mounting holes 60 on back plate 56 and are received within through bore 76 of standouts 52. Likewise, front securing members 54 partially pass through a subset of mounting holes 60 on front plate 58 and are received within through bore 76 of standouts 52. Front and rear securing members 54 and 56 are tightened to secure back plate 56 to front plate 58 to contain and protect the components of single input controller 20. Various alternative methods of securing back plate 56 to front plate 58 are contemplated including replacing rear securing members 56 with standouts 52 that screw into back plate 56.

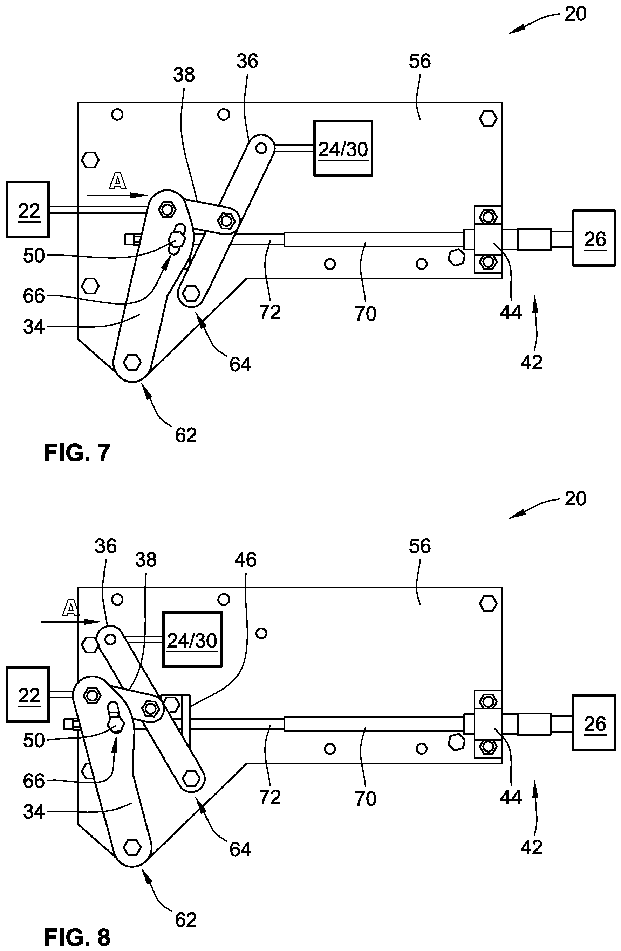

Referring now to FIG. 7 and FIG. 8, various stages of the operation of single input controller 20 within system 10 are shown. Clevises 40 and 41 and the mechanical links to fuel control interface 22 and fuel distribution interface 24 are show in FIG. 7 and FIG. 8 as block connections so that the operations and interactions of RPM and fuel control levers 34 and 36 can be clearly depicted. FIG. 7 depicts single input controller 20 at the maximum fuel output position typically associated with the maximum engine horsepower required for takeoff. FIG. 8 depicts single input controller 20 at the minimum fuel output position typically associated with idle or stopped. In one embodiment, the positions for max and minimum fuel are the reverse.

In operation from minimum fuel to full fuel, movement of fuel control interface 22 produces a first mechanical signal (i.e. mechanical motion) indicative of a specific amount of fuel (i.e. max fuel) to be provided to the engine. The first mechanical signal travels down the mechanical links (not shown) coupling fuel control interface 22 to RPM control lever 34 of single input controller 20. The first mechanical signal induces RPM control lever 34 to pivot about first pivot point 62 in the direction of arrow A. Pivoting RPM control lever 34 engages coupling member 50 within cammed slot 66 and induces a second mechanical signal in cable 72 of RPM control linkage 42. Because cable 72 is guided by second bracket 46 and sheath 70 is secured by first bracket 44, cable 72 can only move in a substantially horizontal direction. This limit along with the specific shape of cammed slot 66 translates the first mechanical signal into a signal indicative of the fuel efficient RPM setting that corresponds to the specific amount of power that the engine will produce when fed the specific amount of fuel. Cammed slot 66 is sized and shaped such that the translated second mechanical signal follows the specific fuel efficiency curve for propeller RPM vs engine horsepower for the engine controlled by single input controller 20.

Pivoting RPM control lever 34 also induces fuel control lever 36 to pivot about second pivot point 64 by transferring the mechanical signal received from fuel control interface 22 through linkage 38. Pivoting fuel control lever 36 induces a third mechanical signal which is passed by mechanical linkage to the component coupled to fuel control lever 36 (e.g fuel distribution system 24, idle control module 30, etc.). In embodiments where fuel control lever 36 is coupled to both fuel control interface 22 and fuel distribution system 24 or idle control module 30 (see FIGS. 11 and 12), the first mechanical signal induces the fuel control lever 36 to pivot which in turn induces RPM control lever 34 to pivot. Pivoting fuel and RPM control levers 36 and 34 then transfer the respective pivoting motions to any connected components as described above.

The mechanical transfer of signals is performed at a ratio. Transferring the signals at a ratio allows for easier placement of components and especially a more compact configuration. When a transfer ratio is employed, the ratio is reversed prior to the mechanical signal triggering the function of the system it is terminated at. For example, where a ratio of 1:2 is used in transferring the first mechanical signal through fuel control lever 34 and into the third mechanical signal the third mechanical signal will be transferred back at a ratio of 2:1 before it is terminated at fuel distribution system 24. Reversing the ratio ensures that there is a direct relationship between the movement of fuel control interface 22 and the resulting action performed by the engine.

Referring now to FIG. 9 and FIG. 10, various stages of the operation of single input controller 20 and idle governor 28 coupled to idle control module 30 within system 10 are shown. The mechanical link to fuel control interface 22 is show in FIG. 9 and FIG. 10 as a block connection so that the operations and interactions of single input controller 20 and idle governor 28 can be clearly depicted. FIG. 9 depicts single input controller 20 at the maximum fuel output position typically associated with the maximum engine horsepower required for takeoff. FIG. 10 depicts single input controller 20 at the minimum fuel output position typically associated with idle or stopped. In one embodiment, the positions for max and minimum fuel are the reverse.

Idle control module 30 includes an idle control lever 78 and clevises 80, 82, and 84. Clevises 80, 82, and 84 include mounting holes and are pivotably coupled to idle control lever 78 at pivot points 86, 88, and 90 respectively. Single input engine controller 20 is coupled to idle control module 30 by a mechanical link or cable 92 having one end secured in the mounting hole of clevis 80 and the other secured in mounting hole 69 of clevis 41. Idle governor 28 includes a connector 94. Connector 94 is secured within the mounting hole of clevis 82 to couple idle governor 28 to idle control module 30. Clevis 84 couples idle control module 30 to fuel distribution system 24 by a cable or mechanical link (not shown). In one embodiment, clevises 80, 82, and 84 are omitted and the mechanical links and/or connectors are pivotably coupled directly to idle control lever 78.

In operation, single input controller 20 operates as described above in reference to FIG. 7 and FIG. 8. In this embodiment, the third mechanical signal is passed to idle control module 30 through cable 92. Specifically, as fuel control lever is induced to pivot about second pivot point 64 the induced third mechanical signal is passed on to idle control module 30 which induces pivot point 86 of idle control lever 78 to move in the direction of arrow A as can be seen when comparing FIG. 9 to FIG. 10. The induced movement of pivot point 86 causes idle control lever 78 to effectively pivot about pivot point 88. The pivoting of idle control lever 78 induces movement in clevis 84 which translates that movement as a mechanical signal indicative of the amount of fuel to be supplied to the engine and passes it on to fuel distribution system 24 which supplies the specified amount of fuel to the engine to output the specific horsepower.

When single input controller 20 is positioned for minimum fuel output as shown in FIG. 10, the mechanical components of system 10 effectively fix pivot point 86 to a specific location in relation to the components of system 10. In this configuration, idle governor 28 toggles connector 94 from a rest position in the direction of arrow A and back to the rest position in a direction opposite arrow A. The toggling induces pivot point 88 to toggle in the same manner which in turn induces idle control lever 78 to pivot forward and back around pivot point 86. The back and forth pivoting of idle control lever 78 translates into a mechanical signal indicative of the amount of fuel to be supplied to the engine for idling. The signal is passed on to fuel distribution system 24 which supplies the specified amount of fuel required to idle the engine.

It should be understood that the figures illustrate the exemplary embodiments in detail, and it should be understood that the present application is not limited to the details or methodology set forth in the description or illustrated in the figures. It should also be understood that the terminology is for the purpose of description only and should not be regarded as limiting.

For purposes of this disclosure, the term "coupled" means the joining of two components directly or indirectly to one another. Such joining may be stationary in nature or movable in nature. Such joining may be achieved with the two members and any additional intermediate members being integrally formed as a single unitary body with one another or with the two members or the two members and any additional member being attached to one another. Such joining may be permanent in nature or alternatively may be removable or releasable in nature.

Further modifications and alternative embodiments of various aspects of the invention will be apparent to those skilled in the art in view of this description. Accordingly, this description is to be construed as illustrative only. The construction and arrangements, shown in the various exemplary embodiments, are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. Some elements shown as integrally formed may be constructed of multiple parts or elements, the position of elements may be reversed or otherwise varied, and the nature or number of discrete elements or positions may be altered or varied. The order or sequence of any process, logical algorithm, or method steps may be varied or re-sequenced according to alternative embodiments. Other substitutions, modifications, changes and omissions may also be made in the design, operating conditions and arrangement of the various exemplary embodiments without departing from the scope of the present invention as defined by the claims.

## Claims

1. A single input aircraft engine and propeller control system (10) comprising:
a fuel control interface (22) configured to produce a first mechanical signal corresponding to a specific amount of fuel to be fed to an engine to produce a specific amount of horsepower, the specific amount of horsepower having a corresponding RPM setting for a propeller coupled to the engine, the RPM setting corresponding to a maximum fuel efficiency;
a single input engine controller (20) coupled to the fuel control interface (22), the single input engine controller (20) being configured to: receive the first mechanical signal, translate the first mechanical signal into a second mechanical signal indicative of the RPM setting corresponding to the specific amount of horsepower, and output a third mechanical signal indicative of the specific amount of fuel in response to the first mechanical signal;
a fuel distribution system (24) coupled to the single input engine controller (20), the fuel distribution system (24) being configured to: receive the third mechanical signal, and feed the specific amount of fuel to the engine in response to the third mechanical signal; and
a propeller RPM controller (26) coupled to the single input engine controller (20), the propeller RPM controller (26) being configured to: receive the second mechanical signal, and set the RPM of the propeller to the corresponding RPM setting in response to the second mechanical signal; wherein
the first mechanical signal is transferred into the third mechanical signal using a first ratio, and the third mechanical signal is transferred back at a second ratio that is the reverse of the first ratio.

2. A single input aircraft engine and propeller control system (10) comprising:
a fuel control interface (22) configured to produce a first mechanical signal corresponding to a specific amount of fuel to be fed to an engine to produce a specific amount of horsepower, the specific amount of horsepower having a corresponding RPM setting for a propeller coupled to the engine, the RPM setting corresponding to a maximum fuel efficiency;
a housing (32) having a first pivot point (62) and a second pivot point (64);
a fuel control lever (36) pivotably coupled to the first pivot point (62);
an RPM control lever (34) having a cammed slot (66) and being pivotably coupled to the second pivot point (64), the fuel control lever (36), and the fuel control interface (22) such that the first mechanical signal induces the RPM control lever (34) and the fuel control lever (36) to pivot about the first and second pivot points (62, 64), the cammed slot (66) being shaped and sized to translate the pivoting of the RPM control lever (34) into a second mechanical signal indicative of the RPM setting corresponding to the specific amount of horsepower;
a fuel distribution system (24) pivotably coupled to the fuel control lever (36), the fuel distribution system (24) being configured to: receive a third mechanical signal in response to the pivoting of the fuel control lever (36), and feed the specific amount of fuel to the engine in response to the third mechanical signal; and
a propeller RPM controller (26) slidably coupled to the cammed slot (66), the propeller RPM controller (26) being configured to: receive the second mechanical signal in response to the pivoting of the RPM control lever (34), and set the RPM of the propeller to the corresponding RPM setting in response to the second mechanical signal; wherein
the first mechanical signal is transferred into the third mechanical signal using a first ratio, and the third mechanical signal is transferred back at a second ratio that is the reverse of the first ratio.

3. The control system (10) of claim 2 further comprising:
an idle control lever (78) pivotably coupled to the fuel control lever (36) and the fuel distribution system (24) to receive the third mechanical signal and pass the third mechanical signal to the fuel distribution system (24); and
an idle governor (28) coupled to the idle control lever (78) to idle the engine when the specific amount of horsepower indicated by the first mechanical signal produced by the fuel control interface (22) is zero.

4. The control system (10) of claim 2 wherein the RPM control lever (34) and the fuel control lever (36) are pivotably coupled together by a linkage (38).

5. The control system (10) of claim 4 wherein the fuel control lever (36) comprises a first end and a second end, wherein the first end is pivotably coupled to the first pivot point (62), and wherein the fuel control lever (36) receives the first mechanical signal at the second end.

6. The control system (10) of claim 5 wherein the linkage (38) is pivotably coupled to the fuel control lever (36) at a position between the first end and the second end, and movement of the fuel control lever (36) in response to the first mechanical signal induces movement of the RPM control lever (34).

7. The control system (10) of claim 4 wherein the RPM control lever (34) comprises a third end and a fourth end, wherein the third end is pivotably coupled to the second pivot point (64), and wherein the RPM control lever (34) receives the first mechanical signal at the fourth end.

8. The control system (10) of claim 7 wherein the linkage (38) is pivotably coupled to the RPM control lever (34) at the fourth end, and movement of the RPM control lever (34) in response to the first mechanical signal induces movement of the fuel control lever (36).

9. The control system (10) of claim 2 wherein the RPM control lever (34) comprises a third end and a fourth end, and wherein the cammed slot (66) is positioned between the third end and the fourth end.

## Patentansprüche

1. Einzeleingangsluftfahrzeugtriebwerk- und Propellersteuersystem (10), das umfasst:
eine Kraftstoffsteuerschnittstelle (22), die dazu konfiguriert ist, ein erstes mechanisches Signal zu erzeugen, das einer spezifischen Kraftstoffmenge entspricht, die zu einem Motor eingespeist werden soll, um eine spezifische Pferdestärkenmenge zu erzeugen, wobei die spezifische Pferdestärkenmenge eine entsprechende Drehzahleinstellung für einen Propeller, der mit dem Triebwerk gekoppelt ist, aufweist, wobei die Drehzahleinstellung einer maximalen Kraftstoffeffizienz entspricht;
eine Einzeleingangstriebwerksteuervorrichtung (20), die mit der Kraftstoffsteuerschnittstelle (22) gekoppelt ist, wobei die Einzeleingangstriebwerksteuervorrichtung (20) dazu konfiguriert ist: das erste mechanische Signal zu empfangen, das erste mechanische Signal in ein zweites mechanisches Signal umzuwandeln, das die Drehzahleinstellung angibt, die der spezifischen Pferdestärkenmenge entspricht, und ein drittes mechanisches Signal auszugeben, das die spezifische Kraftstoffmenge als Reaktion auf das erste mechanische Signal angibt;
ein Kraftstoffverteilungssystem (24), das mit der Einzeleingangstriebwerksteuervorrichtung (20) gekoppelt ist, wobei das Kraftstoffverteilungssystem (24) dazu konfiguriert ist: das dritte mechanische Signal zu empfangen und die spezifische Kraftstoffmenge zu dem Triebwerk als Reaktion auf das dritte mechanische Signal einzuspeisen; und
eine Propellerdrehzahlsteuervorrichtung (26), die mit der Einzeleingangstriebwerksteuervorrichtung (20) gekoppelt ist, wobei die Propellerdrehzahlsteuervorrichtung (26) dazu konfiguriert ist: das zweite mechanische Signal zu empfangen und die Drehzahl des Propellers auf die entsprechende Drehzahleinstellung als Reaktion auf das zweite mechanisches Signal einzustellen; wobei
das erste mechanische Signal in das dritte mechanische Signal unter Verwenden eines ersten Verhältnisses transferiert wird, und das dritte mechanische Signal mit einem zweiten Verhältnis, das zu dem ersten Verhältnis umgekehrt ist, zurücktransferiert wird.

2. Einzeleingangsluftfahrzeugtriebwerk- und Propellersteuersystem (10), das umfasst:
eine Kraftstoffsteuerschnittstelle (22), die dazu konfiguriert ist, ein erstes mechanisches Signal zu erzeugen, das einer spezifischen Kraftstoffmenge entspricht, die zu einem Triebwerk eingespeist werden soll, um eine spezifische Pferdestärkenmenge zu erzeugen, wobei die spezifische Pferdestärkenmenge eine entsprechende Drehzahleinstellung für einen Propeller, der mit dem Triebwerk gekoppelt ist, aufweist, wobei die Drehzahleinstellung einer maximalen Kraftstoffeffizienz entspricht;
ein Gehäuse (32), das einen ersten Schwenkpunkt (62) und einen zweiten Schwenkpunkt (64) aufweist;
einen Kraftstoffsteuerhebel (36), der schwenkbar mit dem ersten Schwenkpunkt (62) verbunden ist;
einen Drehzahlsteuerhebel (34), der einen Nockenschlitz (66) aufweist und schwenkbar mit dem zweiten Schwenkpunkt (64), dem Kraftstoffsteuerhebel (36) und der Kraftstoffsteuerschnittstelle (22) derart verbunden ist, dass das erste mechanische Signal den Drehzahlsteuerhebel (34) und den Kraftstoffsteuerhebel (36) veranlasst, um den ersten und den zweiten Schwenkpunkt (62, 64) zu schwenken, wobei der Nockenschlitz (66) geformt und bemessen ist, um das Schwenken des Drehzahlsteuerhebels (34) in ein zweites mechanisches Signal, das die Drehzahleinstellung, die der spezifischen Pferdestärkenmenge entspricht, angibt, zu übersetzen;
ein Kraftstoffverteilungssystem (24), das schwenkbar mit dem Kraftstoffsteuerhebel (36) verbunden ist, wobei das Kraftstoffverteilungssystem (24) dazu konfiguriert ist: ein drittes mechanisches Signal als Reaktion auf das Schwenken des Kraftstoffsteuerhebels (36) zu empfangen und die spezifische Kraftstoffmenge zu dem Triebwerk als Reaktion auf das dritte mechanische Signal einzuspeisen; und
eine Propellerdrehzahlsteuervorrichtung (26), die gleitbar mit dem Nockenschlitz (66) gekoppelt ist, wobei die Propellerdrehzahlsteuervorrichtung (26) dazu konfiguriert ist: das zweite mechanische Signal als Reaktion auf das Schwenken des Drehzahlsteuerhebels (34) zu empfangen und die Drehzahl des Propellers auf die entsprechende Drehzahleinstellung als Reaktion auf das zweite Signal einzustellen; wobei
das erste mechanische Signal in das dritte mechanische Signal unter Verwenden eines ersten Verhältnisses transferiert wird, und das dritte mechanische Signal mit einem zweiten Verhältnis, das zu dem ersten Verhältnis umgekehrt ist, zurücktransferiert wird.

3. Steuersystem (10) nach Anspruch 2, das weiter umfasst:
einen Leerlaufsteuerhebel (78), der schwenkbar mit dem Kraftstoffsteuerhebel (36) und dem Kraftstoffverteilungssystem (24) gekoppelt ist, um das dritte mechanische Signal zu empfangen und das dritte mechanische Signal zu dem Kraftstoffverteilungssystem (24) weiterzugeben; und
einen Leerlaufregler (28), der mit dem Leerlaufsteuerhebel (78) gekoppelt ist, um das Triebwerk im Leerlauf zu halten, wenn die spezifische Pferdestärkenmenge, die von dem ersten mechanischen Signal, angegeben wird, das von der Kraftstoffsteuerschnittstelle (22) erzeugt wird, null ist.

4. Steuersystem (10) nach Anspruch 2, wobei der Drehzahlsteuerhebel (34) und der Kraftstoffsteuerhebel (36) schwenkbar miteinander durch eine Anbindung (38) gekoppelt sind.

5. Steuersystem (10) nach Anspruch 4, wobei der Kraftstoffsteuerhebel (36) ein erstes und ein zweites Ende umfasst, wobei das erste Ende schwenkbar mit dem ersten Schwenkpunkt (62) gekoppelt ist, und wobei der Kraftstoffsteuerhebel (36) das erste mechanische Signal an dem zweiten Ende empfängt.

6. Steuersystem (10) nach Anspruch 5, wobei die Anbindung (38) schwenkbar mit dem Kraftstoffsteuerhebel (36) an einer Position zwischen dem ersten Ende und dem zweiten Ende gekoppelt ist, und Bewegung des Kraftstoffsteuerhebels (36) als Reaktion auf das erste mechanische Signal Bewegung des Drehzahlsteuerhebels (34) veranlasst.

7. Steuersystem (10) nach Anspruch 4, wobei der Drehzahlsteuerhebel (34) ein drittes Ende und ein viertes Ende umfasst, wobei das dritte Ende schwenkbar mit dem zweiten Schwenkpunkt (64) gekoppelt ist, und wobei der Drehzahlsteuerhebel (34) das erste mechanische Signal an dem vierten Ende empfängt.

8. Steuersystem (10) nach Anspruch 7, wobei die Anbindung (38) schwenkbar mit dem Drehzahlsteuerhebel (34) an dem vierten Ende gekoppelt ist, und Bewegung des Drehzahlsteuerhebels (34) als Reaktion auf das erste mechanische Signal Bewegung des Kraftstoffsteuerhebels (36) veranlasst.

9. Steuersystem (10) nach Anspruch 2, wobei der Drehzahlsteuerhebel (34) ein drittes Ende und ein viertes Ende umfasst, und wobei der Nockenschlitz (66) zwischen dem dritten Ende und dem vierten Ende positioniert ist.

## Revendications

1. Système de commande d'hélice et de moteur d'aéronef à entrée unique (10) comprenant :
une interface de commande de carburant (22) configurée pour produire un premier signal mécanique correspondant à une quantité spécifique de carburant à fournir à un moteur pour produire une quantité spécifique de puissance, la quantité spécifique de puissance ayant un réglage de régime correspondant pour une hélice couplée au moteur, le réglage de régime correspondant à un rendement maximal de carburant ;
un organe de commande de moteur à entrée unique (20) couplé à l'interface de commande de carburant (22), l'organe de commande de moteur à entrée unique (20) étant configuré pour : recevoir le premier signal mécanique, convertir le premier signal mécanique en un deuxième signal mécanique indicatif du réglage de régime correspondant à la quantité spécifique de puissance, et délivrer un troisième signal mécanique indicatif de la quantité spécifique de carburant en réponse au premier signal mécanique ;
un système de distribution de carburant (24) couplé à l'organe de commande de moteur à entrée unique (20), le système de distribution de carburant (24) étant configuré pour : recevoir le troisième signal mécanique et fournir la quantité spécifique de carburant au moteur en réponse au troisième signal mécanique ; et
un organe de commande de régime d'hélice (26) couplé à l'organe de commande de moteur à entrée unique (20), l'organe de commande de régime d'hélice (26) étant configuré pour : recevoir le deuxième signal mécanique, et régler le régime de l'hélice au réglage de régime correspondant en réponse au deuxième signal mécanique ; dans lequel
le premier signal mécanique est transféré dans le troisième signal mécanique en utilisant un premier rapport, et le troisième signal mécanique est retransféré à un second rapport qui est l'inverse du premier rapport.

2. Système de commande d'hélice et de moteur d'aéronef à entrée unique (10), comprenant :
une interface de commande de carburant (22) configurée pour produire un premier signal mécanique correspondant à une quantité spécifique de carburant à fournir à un moteur pour produire une quantité spécifique de puissance, la quantité spécifique de puissance ayant un réglage de régime correspondant pour une hélice couplée au moteur, le réglage de régime correspondant à un rendement maximal de carburant ;
un logement (32) ayant un premier point pivot (62) et un second point pivot (64) ;
un levier de commande de carburant (36) couplé en pivotant au premier point pivot (62) ;
un levier de commande de régime (34) ayant une fente à came (66) et étant couplé en pivotant au second point pivot (64), au levier de commande de carburant (36) et à l'interface de commande de carburant (22) de sorte que le premier signal mécanique amène le levier de commande de régime (34) et le levier de commande de carburant (36) à pivoter autour des premier et second points pivots (62, 64), la fente à came (66) étant formée et dimensionnée pour convertir le pivotement du levier de commande de régime (34) en un second signal mécanique indicatif du réglage de régime correspondant à la quantité spécifique de puissance ;
un système de distribution de carburant (24) couplé en pivotant au levier de commande de carburant (36), le système de distribution de carburant (24) étant configuré pour : recevoir un troisième signal mécanique en réponse au pivotement du levier de commande de carburant (36), et fournir la quantité spécifique de carburant au moteur en réponse au troisième signal mécanique ; et
un organe de commande de régime d'hélice (26) couplé en coulissant à la fente à came (66), l'organe de commande de régime d'hélice (26) étant configuré pour : recevoir le deuxième signal mécanique en réponse au pivotement du levier de commande de régime (34), et régler le régime de l'hélice au réglage de régime correspondant en réponse au deuxième signal mécanique ; dans lequel
le premier signal mécanique est transféré dans le troisième signal mécanique en utilisant un premier rapport, et le troisième signal mécanique est retransféré à un second rapport qui est l'inverse du premier rapport.

3. Système de commande (10) selon la revendication 2, comprenant en outre :
un levier de commande de ralenti (78) couplé en pivotant au levier de commande de carburant (36) et au système de distribution de carburant (24) pour recevoir le troisième signal mécanique et passer le troisième signal mécanique au système de distribution de carburant (24) ; et
un régulateur de ralenti (28) couplé au levier de commande de ralenti (78) pour faire fonctionner le moteur au ralenti lorsque la quantité spécifique de puissance indiquée par le premier signal mécanique produit par l'interface de commande de carburant (22) est zéro.

4. Système de commande (10) selon la revendication 2, dans lequel le levier de commande de régime (34) et le levier de commande de carburant (36) sont couplés l'un à l'autre en pivotant par une tringlerie (38).

5. Système de commande (10) selon la revendication 4, dans lequel le levier de commande de carburant (36) comprend une première extrémité et une deuxième extrémité, dans lequel la première extrémité est couplée en pivotant au premier point pivot (62), et dans lequel le levier de commande de carburant (36) reçoit le premier signal mécanique à la deuxième extrémité.

6. Système de commande (10) selon la revendication 5, dans lequel la tringlerie (38) est couplée en pivotant au levier de commande de carburant (36) à une position entre la première extrémité et la deuxième extrémité, et un déplacement du levier de commande de carburant (36) en réponse au premier signal mécanique provoque un déplacement du levier de commande de régime (34).

7. Système de commande (10) selon la revendication 4, dans lequel le levier de commande de régime (34) comprend une troisième extrémité et une quatrième extrémité, dans lequel la troisième extrémité est couplée en pivotant au second point pivot (64), et dans lequel le levier de commande de régime (34) reçoit le premier signal mécanique à la quatrième extrémité.

8. Système de commande (10) selon la revendication 7, dans lequel la tringlerie (38) est couplée en pivotant au levier de commande de régime (34) à la quatrième extrémité, et un déplacement du levier de commande de régime (34) en réponse au premier signal mécanique provoque un déplacement du levier de commande de carburant (36).

9. Système de commande (10) selon la revendication 2, dans lequel le levier de commande de régime (34) comprend une troisième extrémité et une quatrième extrémité, dans lequel la fente à came (66) est positionnée entre la troisième extrémité et la quatrième extrémité.
